# DEMANDE DE BREVET EUROPEEN

(11) **EP 3 276 061 A1**
(43) Date de publication de la demande: **31.01.2018**
(21) Numéro de dépôt: 17173171.4
(22) Date de dépôt: 29.05.2017
(51) Int. Cl.: D04B 21/12, B29C 70/22

(54) **GRILLE D'ARMATURE POUR STRUCTURES COMPOSITES**

(30) Priorité: 29.07.2016 FR 1657336
(71) Demandeur: MDB Texinov, 38110 Saint Didier de la Tour (FR); Deltaval, 69006 Lyon (FR)
(72) Inventeur: TANKERE, Jacques, 01800 MEXIMIEUX (FR); DUCOL, Jean-Paul, 69170 LES SAUVAGES (FR)
(74) Mandataire: Cabinet Laurent & Charras

(57) **Abrégé**

Cette grille d'armature est destinée à être intégrée dans une structure composite mettant en oeuvre des résines synthétiques.

La grille est réalisée par tricotage selon la technologie « *à mailles jetées* » notamment sur métier à tricoter RACHEL.

La grille est réalisée à base de mèches de fibres de lin non retordues ou à faible torsion (303, 304).

Les fils de liage (301, 302) assurant la cohésion de la grille sont réalisés en lin ou en matière biodégradable (PLA) ou en matière synthétique de type PET susceptible de s'associer chimiquement à la résine synthétique.

## Description

### DOMAINE DE L'INVENTION

L'invention appartient au domaine des structures composites, c'est-à-dire de structures complexes mettant en oeuvre des résines, notamment synthétiques, conformées notamment par moulage.

De telles structures composites ont aujourd'hui de très nombreuses applications, notamment et de manière non exhaustive, dans le domaine de l'automobile et de l'aéronautique.

### ETAT ANTERIEUR DE LA TECHNIQUE

Classiquement, de telles structures composites sont renforcées mécaniquement au moyen de supports, classiquement constitués de renforts réalisés en fibres de carbone ou en fibres de verre, de tels renforts étant obtenus par tissage classique ou non-tissé multidirectionnel. En raison même de cette structure tissée ou non-tissé des renforts, ils présentent des ouvertures de faibles dimensions, pour ne pas dire nulles, susceptibles d'affecter l'adhérence des résines synthétiques mises en oeuvre, et de manière subséquente et corolairement la cohésion voire même la résistance mécanique du produit fini.

En outre, ces structures de renfort tissées n'autorisent pas ou faiblement une déformation dudit renfort, avant moulage, limitant en conséquence les domaines d'application possibles.

Une autre problématique, cette fois indépendante du mode de réalisation de la structure de renfort, s'est faite plus récemment jour dans le cadre du recyclage des produits composites. En effet, dans le cadre d'une démarche écoenvironnementale, on cherche de plus en plus à recycler ces produits composites après usage. Or les renforts en fibres de carbone ou fibres de verre ne sont pas recyclables et constituent donc autant de déchets.

En outre, de nouvelles normes imposent dorénavant aux constructeurs de véhicules automobiles un pourcentage minimum de « matières vertes » ou bio-sourcées.

### EXPOSE DE L'INVENTION

L'un des premiers objets de la présente invention réside tout d'abord dans l'obtention d'une plus grande cohésion des structures composites dans lesquelles des renforts sont mis en oeuvre. Pour ce faire, ce renfort est réalisé par tricotage selon la technologie dite « *à mailles jetées* », notamment sur métier à tricoter RACHEL, avec ou sans insertion de trames.

Ce faisant, en raison de l'utilisation de cette technologie, il est possible de ménager des ouvertures au sein de la grille constitutive du renfort, favorisant lors de l'étape de moulage, l'imprégnation de ladite grille par la résine, et donc corollairement après moulage, une plus grande cohésion de la structure composite.

En outre, un autre objet de l'invention est de pouvoir disposer d'une certaine déformabilité de la structure de renfort, là encore, objet obtenu de par la technologie de réalisation de la grille en l'espèce, par tricotage selon la technologie « *à mailles jetées* ».

Un autre objet de l'invention vise à disposer d'un excellent rapport poids/performances mécaniques, le poids étant considéré dans la plupart des applications comme un ennemi.

Cet objet est obtenu par l'invention en mettant en oeuvre comme composant de la grille de renfort des mèches de fibres en lin, bio-sourcés et biodégradables.

Ce faisant, outre le gain significatif obtenu en termes de rapport poids/performances mécaniques en raison des propriétés bien connues de résistance mécanique du lin, on favorise également le caractère recyclable de la structure composite après usage.

Ainsi donc, l'invention vise une grille d'armature pour structure composite mettant en oeuvre des résines synthétiques :
- la grille étant réalisée par tricotage selon la technologie *« à mailles jetées »* notamment sur métier à tricoter RACHEL ;
- la grille étant réalisée à base de mèches de fibres de lin non retordues ou à faible torsion en lin ;
- les fils de liage assurant la cohésion de la grille étant réalisés en lin ou en matière biosourcée et biodégradable ou encore en matière synthétique de type PET (polytéréphtalate d'éthylène), susceptible de s'associer chimiquement à la résine entrant dans la constitution de la structure composite.

Selon l'invention, la grille d'armature présente des ouvertures résultant de la technologie mise en oeuvre (tricotage avec technologie « *à mailles jetées* ») dont les dimensions sont comprises entre 2,12 millimètres (jauge 12) et 300 millimètres.

Selon une autre caractéristique de l'invention, le titre et le diamètre des mèches de fibres non retordues ou à faible torsion en lin sont respectivement compris entre 200 et 100 000 dtex, soit 1 à 10 millimètres

Selon l'invention, les fils de liage, de dimensions classiquement réduites par rapport aux mèches constitutives de la grille, présentent un titre compris entre 50 et 4000 dtex, et un diamètre compris entre 0,1 et 2 millimètres

Selon encore une autre caractéristique de l'invention, la grille de renfort est associée directement en fabrication sur une machine à technologie, à maille jetée avec insertion en sens production, à un voile tissé, tricoté ou à un non-tissé, de même nature ou pas que la grille, le voile ou le non-tissé étant réalisé en matériau biodégradable.

L'invention vise également la structure composite mettant en oeuvre une telle grille d'armature.

### BREVE DESCRIPTION DES FIGURES

La manière dont l'invention peut être réalisée et les avantages qui en découlent, ressortiront mieux des exemples de réalisation qui suivent, données à titre indicatif et non limitatif à l'appui des figures annexées.
Les figures 1a et 1b sont des représentations schématiques d'un exemple de grille d'armature conforme à l'invention
La figure 2 est un autre exemple de réalisation de la grille d'armature conforme à l'invention
Les figures 3a et 3b sont des vues schématiques respectivement de dessus et en section d'un autre exemple de réalisation de la grille d'armature conforme à l'invention
La figure 4 est une vue schématique en perspective d'une autre forme de réalisation de l'invention, associant la grille à un non-tissé.

### DESCRIPTION DETAILLEE DE L'INVENTION

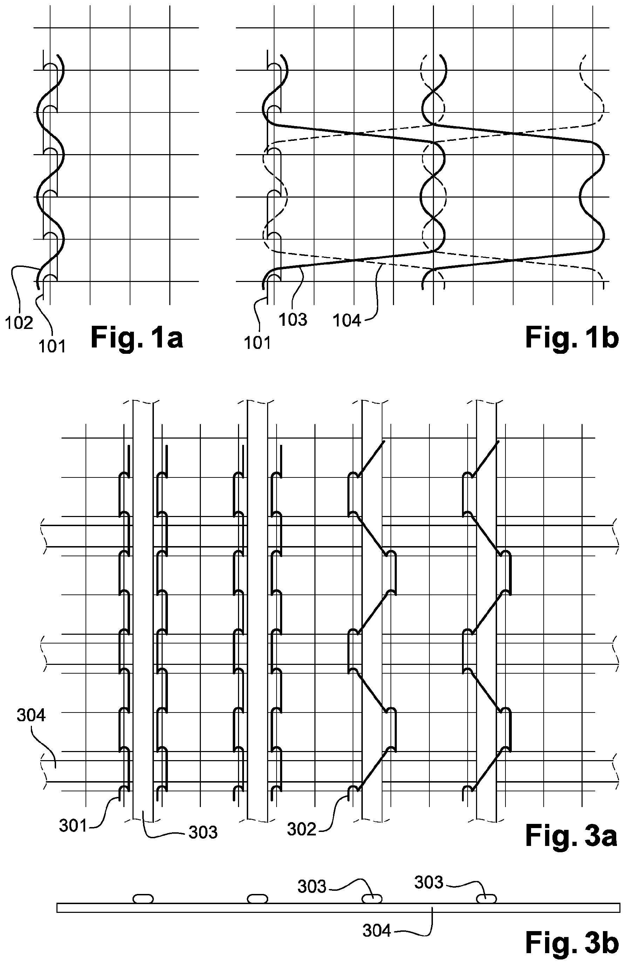

On a représenté au sein des figures 1, un premier mode de réalisation de la grille d'armature conforme à l'invention.

Cette grille, obtenue par tricotage sur métier RACHEL (tel que commercialisé par exemple par la société KARL MAYER), est constituée de mèches de fibre non retordues ou à faible torsion en lin (102, 103, 104) évoluant selon un liage spécifique.

Dans l'exemple représenté sur la figure 1b, les mèches de lin non retordues ou à faible torsion de lin (103, 401) sont insérés en trame partielles, de telle sorte à leur conférer une évolution sensiblement en diagonale, et ainsi définir des ouvertures de dimensions déterminées à la grille en résultant.

Alternativement, et/ou complémentairement, des mèches peuvent évoluer de manière linéaire (figure 1a). On obtient ainsi une géométrie ouverte multidirectionnelle ?

Dans un cas comme dans l'autre, des fils de liage (101), également en lin ou en matériau biodégradable ou bio-fragmentable (PLA), voire en PET, assurent la cohésion de la grille, par exemple selon une armure chainette.

Avec l'évolution des matières premières et des matériaux, il est envisageable d'utiliser également, pour le fil de liage, des fils de nature semblable aux matrices composites (PLA : acide polylactique ou autres) et ainsi de faciliter le recyclage total des pièces finales intégrant la grille de l'invention.

Selon ces configurations, la grille est susceptible d'être partiellement déformable, et notamment d'être extensible selon au moins une direction, en raison de l'extensibilité résultant de l'armure et du mode de liage. Ce caractère déformable présente un atout majeur dans le cadre de la réalisation de structures composite « en forme » ou en « volume », c'est-à-dire non plane, ce qui n'est pas possible avec les grilles de renfort de l'art antérieur, justement dépourvues d'une telle faculté de déformabilité.

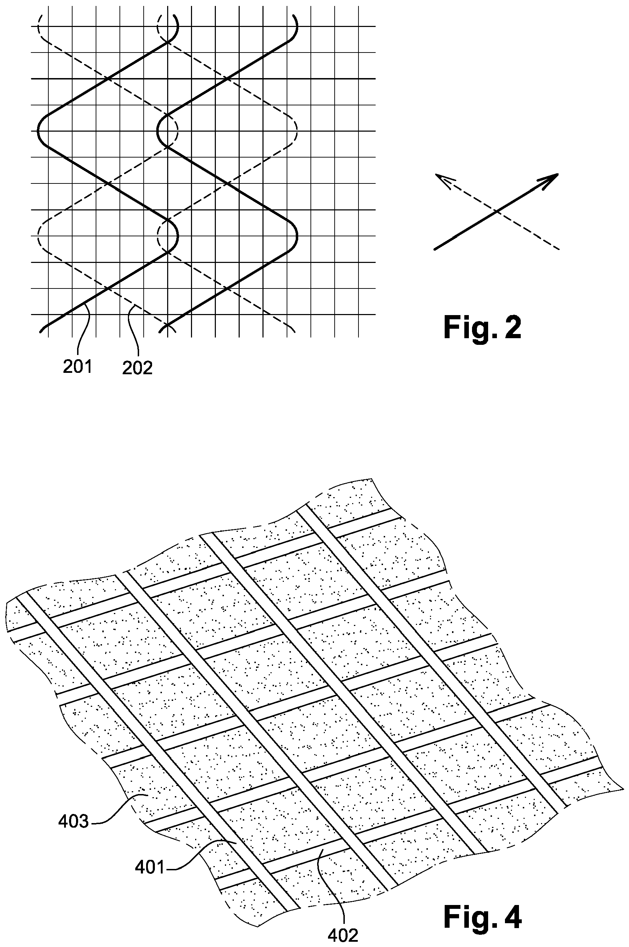

Le mode de réalisation de la figure 2 est une variante de celui illustré au sein des figures 1a et 1b. Pour la simplicité de la représentation, les fils de liage n'ont pas été représentés. Les fibres en lin (201, 202) adoptent en l'espèce une forme en chevrons, conférant une résistance mécanique accrue à la grille en résultant selon les directions diagonales, tout en conservant les propriétés d'extensibilité de ladite grille.

Dans ce cas, les mèches de fibres en lin (201, 202), au lieu d'effectuer des trames partielles, se déplacent d'une seule aiguille à chaque rangée de maille ou « tour de machine », en l'espèce six fois dans l'exemple illustré, puis reviennent sur la première ligne d'aiguille. D'autres variantes de ce type sont possibles.

La figure 3a représente encore un autre mode de réalisation de l'invention, dans lequel, les mèches de fibres en lin (303, 304) sont orientés en chaine et en trame (ou en sens production et en sens travers).

Les fils de liage (301, 302) assurent dans cette configuration le blocage de la grille, c'est-à-dire, la non-possibilité d'une extension dans l'une quelconque des directions. En d'autres termes, la grille est bloquée dans les deux directions (sens production et sens travers), les mèches en lin étant rectilignes.

Dans la configuration illustrée à gauche sur la figure, les fils de liage (301) sont liés par des chainettes disposées de part et d'autre de la mèche de fibres de façon à laisser un maximum de liberté à cette dernière, afin qu'ils puissent se positionner le plus à plat possible. Dans ce cas les mèches de trame sont maintenues entre elles entre les trames (304) et les jetées sous verticales des chainettes.

Dans la configuration de droite, à la place des chainettes, les fils de liage (302) alternent avec une chainette passant d'une aiguille à l'autre de chaque côté de la mèche en lin (303). Cette construction est un peu plus structurante que celle de la configuration de gauche, et peut apporter des avantages, notamment quand la grille doit présenter une bonne tenue, même en configuration grille ouverte en vue de son intégration dans la structure composite finale.

Les fils de liage, s'ils interdisent l'extension de la grille, permettent cependant de garantir la cohésion de ladite grille tout en permettant de conserver les mèches de renfort en lin le plus plat possible, tel qu'illustré au sein de la figure 3b.

Ce faisant, on obtient une grille de faible épaisseur, ce qui est recherché dans un certain nombre de réalisations de structure composite, dans lesquelles, le renfort doit occuper un volume minimum.

De plus, une grille de faible épaisseur et ouverte permet également d'obtenir un matériau composite de faible épaisseur, de limiter le volume de résine nécessaire pour recouvrir le renfort (la grille), et donc de limiter le poids de la structure composite finale par rapport à des propriétés mécaniques données.

En outre, une telle grille permet d'optimiser la répartition de la résine constitutive du composite, et corollairement de favoriser son adhérence avec la grille. Les propriétés mécaniques de la structure composite finale s'en trouvent améliorées.

L'exemple de réalisation illustré au sein de la figure 4 reprend la grille de la figure 3. Les m^ches en lin (401, 402) ont été représentées On associe à ladite grille, lors de la fabrication sur machine de type Rachel de cette dernière (sur un métier grand trameur), un voile tissé ou tricoté), ou un non tissé (403). Ce dernier a vocation à favoriser la liaison avec la résine lors de la réalisation de la structure composite

L'intégration de ce voile ou de ce non tissé sert de catalyseur pour le mouillage de la résine et son adhérence dans le composite. Des liaisons physicochimiques peuvent ainsi s'établir et favoriser le « collage » relatif entre les deux faces de la grille. Ce voile peut en outre, être choisi parmi différentes matières de type naturel ou d'une composition susceptible de se dissoudre ou de s'associer chimiquement à la résine. En d'autres termes, ce voile ou ce non tissé sont réalisés en un matériau biodégradable ou en un matériau susceptible de s'associer chimiquement directement avec la résine constitutive du composite.

Quel que soit le mode de réalisation de l'invention, la structure composite intégrant la grille est soit plus facilement réalisable, en fonction notamment des propriétés d'extensibilité ou de déformabilité de la grille, soit plus légère, puisqu'aussi bien on joue sur les propriétés mécaniques du lin, constitutif des mèches de renfort.

Enfin, en raison même de la nature des mèches de renfort, on dispose de structures composites davantage recyclables.

## Revendications

1. Grille d'armature pour structure composite mettant en oeuvre des résines synthétiques ***caractérisée* en ce que** :
- la grille est réalisée par tricotage selon la technologie « *à mailles jetées »* notamment sur métier à tricoter RACHEL ;
- la grille est réalisée à base de mèches de fibres de lin non retordues ou à faible torsion (102, 103, 104 ; 201, 202 ; 303, 304 ; 401, 402) ;
- les fils de liage (101 ; 301, 302) assurant la cohésion de la grille sont réalisés en lin ou en matière biodégradable (PLA) ou en matière synthétique de type PET susceptible de s'associer chimiquement à la résine synthétique.

2. Grille d'armature pour structure composite selon la revendication 1, ***caractérisée* en ce qu'**elle présente des ouvertures résultant de la technologie mise en oeuvre (tricotage avec technologie *« à mailles jetées* ») dont les dimensions sont comprises entre 2,12 et 300 millimètres

3. Grille d'armature pour structure composite selon l'une des revendications 1 et *2,* ***caractérisée* en ce que** le titre et le diamètre des mèches de fibres de lin sont respectivement compris entre 200 et 100 000 dtex et entre 1 et 10 millimètres.

4. Grille d'armature pour structure composite selon l'une des revendications 1 à *3,* ***caractérisée* en ce que** les fils de liage présentent un diamètre compris entre 0.1 et 2 millimètres, et dont le titre est compris entre 50 et 4000 dtex.

5. Grille d'armature pour structure composite selon l'une des revendications 1 à *4,* ***caractérisée* en ce que** la grille est bloquée dans les deux directions (sens production et sens travers), les mèches en lin étant rectilignes.

6. Grille d'armature pour structure composite selon l'une des revendications 1 à *4,* ***caractérisée* en ce que** la grille est déformable, et notamment extensible selon au moins une direction.

7. Grille d'armature pour structure composite selon l'une des revendications 1 à *6,* ***caractérisée* en ce qu'**elle est associée directement en fabrication à un voile tissé, tricoté ou à un non-tissé (403), le voile ou le non-tissé étant réalisé en matériau biodégradable ou en un matériau susceptible de s'associer chimiquement directement avec la résine constitutive du composite.

8. Structure composite intégrant une grille d'armature selon l'une des revendications 1 à 7.
